# EUROPEAN PATENT SPECIFICATION

(11) **EP 4 299 952 B1**
(45) Date of publication and mention of the grant of the patent: **01.04.2026**
(21) Application number: 23181297.5
(22) Date of filing: 23.06.2023
(51) Int. Cl.: F16H 61/421, F16H 61/431, F16H 61/465, F16H 61/47, F16H 61/4017

(54) **CONTROL SYSTEM OF A HYDRAULIC TRANSMISSION OF A WORK OR AGRICULTURAL VEHICLE**
STEUERSYSTEM EINES HYDRAULISCHEN GETRIEBES EINES ARBEITS- ODER LANDWIRTSCHAFTLICHEN FAHRZEUGS
SYSTÈME DE COMMANDE D'UNE TRANSMISSION HYDRAULIQUE D'UN VÉHICULE DE TRAVAIL OU AGRICOLE

(30) Priority: 27.06.2022 IT 202200013528
(43) Date of publication of application: 03.01.2024
(73) Proprietor: CNH Industrial Italia S.p.A., 10156 Torino (IT)
(72) Inventor: LIBERTI, Stefano, 10156 Turin (IT); VENEZIA, Antonio, 10156 Turin (IT); GARRAMONE, Adriano, 10156 Turin (IT); GRAVILI, Andrea, 10156 Turin (IT)
(74) Representative: CNH Industrial IP Department

(56) References cited:
- EP-A1- 3 933 121
- EP-A2- 2 119 943

## Description

### Field of the invention

The present invention relates to the field of hydraulic transmissions of work machines and agricultural vehicles.

### State of the art

In the work and agricultural vehicles, the transmission to transfer the motion from a prime mover to the wheels is of the hydraulic type. This comprises a so-called hydrostat, i.e. a hydraulic pump with variable displacement which powers a hydraulic motor.

Very often the transmission defines a series configuration, in which the prime mover drives a variable displacement hydraulic pump, which, in turn, drives a hydraulic motor which can have either fixed or variable displacement.

The hydraulic pump and the hydraulic motor are interconnected in a per se known manner by means of a so-called hydraulic forward supply line and a hydraulic return line.

Between the hydraulic motor and the wheels there is often, but not always, a gearbox with discrete ratios. Very often the ratios are just two, to facilitate the autonomous movement of the vehicle from one workplace to another workplace.

Generally, the rotation speed of the prime mover is directly proportional to the position of the accelerator lever and the displacement of the pump is proportional to the rotational speed of the prime mover, while the displacement of the hydraulic motor is inversely proportional to the speed of the vehicle.

Consequently, the vehicle speed and the rotation speed of the prime mover are approximately directly proportional to each other. This first operation mode is for convenience defined as "accelerator-base", since the rotation speed of the prime mover is approximately directly proportional to the position of the accelerator lever and the speed of the vehicle depends on the rotational speed of the prime mover. The term "about" indicates that the control is in open loop, therefore an increase in the slope causes the vehicle and also the prime mover to slow down.

This fact is very advantageous when the vehicle is working because the driver can manage through the accelerator lever the generation of hydraulic fluid necessary to operate the various on-board devices functional to the work.

However, when the vehicle moves from one workplace to another, the fuel consumption can be excessive. Hereinafter, "prime mover speed" means the "prime mover rotation speed".

In EP 3 933 121 A, the Italian patent application n. 102020000016066, the "ECO" operation is described. In this operating condition the transmission and the prime mover are automatically controlled so that, without varying the vehicle speed, the rotational speed of the prime mover is reduced to a more favourable operating point in terms of fuel consumption.

Switching from accelerator-base mode to ECO mode is based on monitoring
- The speed of the vehicle,
- The speed of rotation of the motor,
- The position of the accelerator lever
which must be constant in the aforementioned time interval for it to switch to ECO mode.

When all the aforementioned conditions are verified, the processing unit, which checks the operation of the prime mover and transmission, causes:
- A reduction in the speed of rotation of the prime mover to a more efficient operating point,
- An increase in the pump displacement and/or a reduction in the displacement of the hydraulic motor,
keeping the vehicle speed unchanged.

In addition, the following conditions must be met to remain in ECO mode:
- The torque delivered must be below a predetermined torque threshold,
- The rotation speed of the prime mover must be higher than a predetermined speed threshold,
- The pressure on the forward (or return) line during forward (or reverse) travel must be below a predetermined pressure threshold.

Therefore, when one of the aforementioned operating conditions is not verified, the processing unit causes the switching to the first operating mode, namely accelerator-base mode.

Preferably, a feedback control is activated which controls the displacement of the hydraulic motor and/or of the pump as a function of the vehicle speed to keep the vehicle speed constant.

According to what is described in the aforementioned Italian application, a further feedback control on the speed of the prime mover is activated to keep the speed of the prime mover sufficiently constant during switching between the first to the second mode.

The ECO operating mode is interrupted, returning to the accelerator-base operating mode, even when
- The operator quickly acts on the accelerator lever and/or
- The load applied to the prime mover exceeds a predetermined threshold, for example in the event of a slope with a slope greater than a predetermined threshold.

Obviously, the variation speed of the position of the accelerator lever as well as the variation of the slope of the road must exceed their respective thresholds in order to cause the control switching from ECO to accelerator-base.

Conversely, when a gentle action on the accelerator lever or a slight variation in the slope of the road travelled by the vehicle is detected, it is foreseen to adapt the displacement of the pump and/or hydraulic motor to respectively adapt the speed of the vehicle to the inclination of the accelerator lever or keep the vehicle speed unchanged.

In all the operating modes described in the aforementioned Italian application it is envisaged that the internal combustion engine is brought to a fixed point of operation with greater efficiency.

However, when the vehicle encounters a significant slope, if the resisting torque is judged to be greater than the engine torque generated by the internal combustion engine, it is evident that the system is forced to switch into accelerator-base mode.

When the vehicle moves along a particularly bumpy path, it can happen that the vehicle frequently switches between the two operating modes due to sudden variations in the resistant torque.

This fact causes considerable wear of the hydraulic transmission and continuous variation of the operating point of the thermal engine with the result of increasing fuel consumption.

### Summary of the invention

The object of the present invention is to reduce the fuel consumption of a work or agricultural vehicle equipped with hydrostatic transmission, especially when traveling from one workplace to another.

The basic idea of the present invention is to implement the accelerator-base mode described above and an ECO mode in which the thermal engine is controlled to constantly maintain a pre-ordered rotation speed which guarantees optimal fuel consumption, while the transmission is controlled by a double check:
- a first control, called "speed control", is activated at least during the changeover from accelerator-base to ECO by modifying the transmission ratio in order to keep the vehicle speed unchanged at least during changeover,
- a second check, called "pressure control", verifies that a pressure value in the hydrostat delivery duct is lower than a predetermined threshold and if this check is negative, the displacement of the hydrostat's hydraulic motor is adjusted so to bring the pressure value to the value of the aforementioned first threshold, without varying the operating point of the prime mover.

Advantageously, in this way it is possible to maintain the ECO mode even when the vehicle encounters a slope, since the working point of the prime mover remains unchanged in the condition of lower fuel consumption.

The adjustment of the displacement of the hydraulic motor of the hydrostat activates a further process which has the purpose of restoring the previous configuration of the hydrostat when a pressure value in the hydrostat delivery duct is lower than a second pressure threshold lower than the first threshold.

Therefore, when the slope ends or when the vehicle interrupts a loading procedure of a shovel, the hydrostat returns to the configuration prior to the adjustment, continuing to maintain the ECO mode.

The dependent claims describe preferred variants of the invention.

### Brief description of the figures

Further objects and advantages of the present invention will become clear from the following detailed description of an example of its embodiment (and its variants) and from the attached drawings given purely by way of non-limiting explanation, in which:
Figure 1 shows an example of a propulsion scheme of a work or agricultural vehicle in which the present invention is implemented,
Figure 2 shows a flow chart which also reports the states of the control system object of the present invention;
Figure 3 shows a flow diagram indicating an example of implementation of a first process object of the present invention carried out in one of the states of Figure 1;

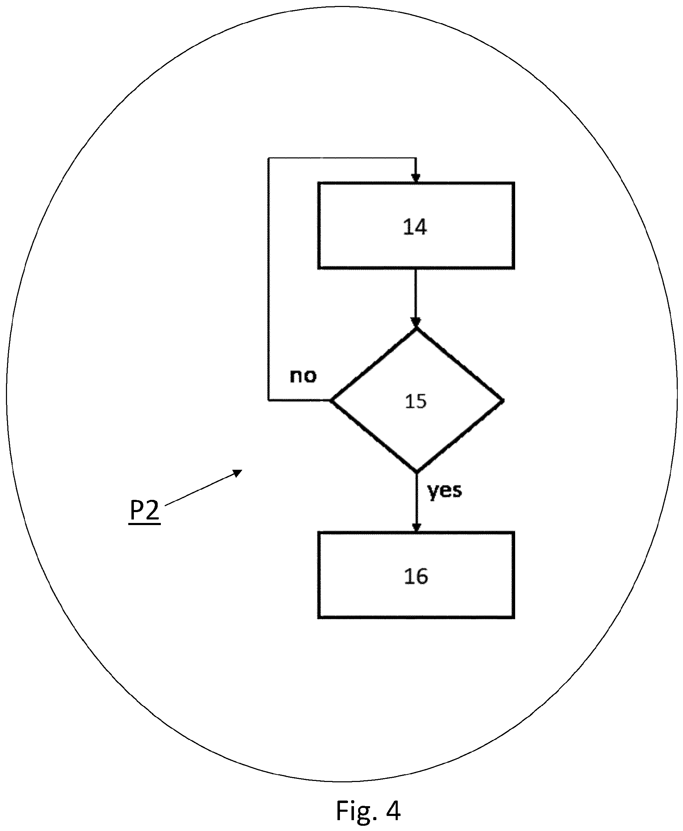

Figure 4 shows a flow chart indicating an example of implementation of a second process possibly activated by the first process of Figure 3.

The same reference numbers and letters in the figures identify the same elements or components or functions.

In the context of this description, the term "second" component does not imply the presence of a "first" component. These terms are in fact used as labels to improve clarity, having no ordinal meaning unless it is clear from the text that there is a precise order to be respected.

The elements and features illustrated in the various preferred embodiments, including the drawings, can be combined with each other as long as they are in accordance with the claims.

### Detailed description of exemplary embodiments

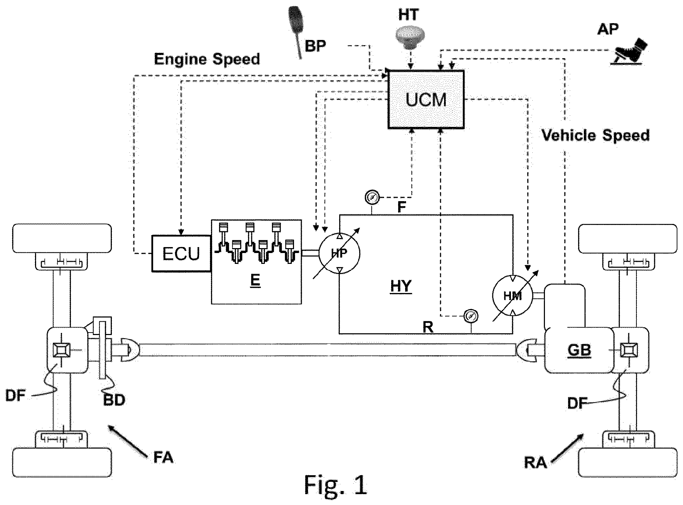

Figure 1 shows a diagram of the propulsion system of a work or agricultural vehicle.

The propulsion system comprises a prime mover E, generally an internal combustion engine, for example Diesel or with positive ignition.

The prime mover is configured to drive in rotation a variable geometry hydraulic pump HP, which feeds a hydraulic motor HM, for vehicular propulsion, by means of a hydraulic delivery line F and a hydraulic return line R.

The hydraulic motor has a shaft operatively associated with a driving axle RA of the vehicle.

Preferably, this association is achieved by means of a discrete ratio gearbox GB. Generally, the secondary shaft of the gearbox GB rotates a port of a differential DF arranged to drive the two drive shafts of the driving axle RA in rotation. The configuration shown in Figure 1 is four-wheel drive, so that a rear driving axle RA and a front driving axle FA are identified. The configuration shown by itself is known. However, this configuration is not essential.

According to the present invention, the hydraulic pump and the hydraulic motor can be controlled independently of each other by means of respective electro-hydraulic valves, not shown, being able to control the displacement of both the hydraulic pump and the hydraulic motor.

An engine control processing unit ECU controls the operation of the prime mover.

A vehicle processing unit UCM interfaces with the engine control processing unit ECU and controls the hydraulic transmission HY as well as monitoring the position of vehicle control levers, buttons and commands, both in relation to vehicle movement and operation of arms, and tools in general, etc .. with which the work vehicle can be or is equipped.

BP indicates the brake pedal, AP the accelerator pedal, HT the manual accelerator lever.

The existence of two distinct processing units is entirely optional. A single processing unit can control both the prime mover and all other vehicle functions, including the operation of the hydrostat, and monitor the activation of human/machine interface elements by the operator.

The present invention is preferably implemented in the vehicle processing unit UCM, but nothing stands in the way of implementing all the controls in the ECU.

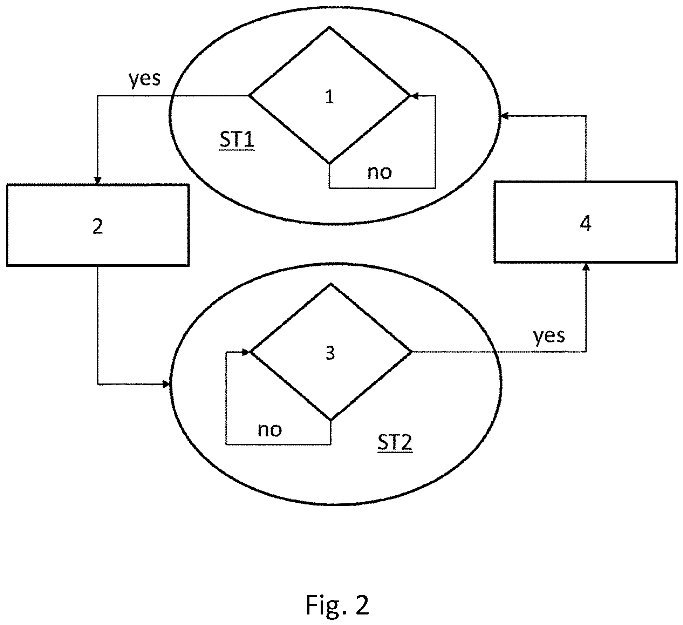

According to the present invention, when at least one operating condition is verified, the processing unit commands a changeover from the accelerator-base operating mode, indicated in figure 2 with the symbol ST1, acronym for "State 1", to the ECO mode, indicated in the figure 1 with the acronym ST2 of "State 2". In state 2, the rotation speed of the prime mover is reduced by the speed indicated by the position of the accelerator pedal to a predetermined speed, which for example, can be about 1500 rpm. This rotation speed represents an optimal speed in terms of efficiency for the thermal engine defining the prime mover and can be identified by means of the BSFC map.

The speed of the motor can be measured in any way, for example by means of the so-called phonic wheel associated with the crankshaft (not shown).

At the same time, the displacement of the hydraulic pump is increased, while the displacement of the hydraulic motor is reduced so as to keep the vehicle at a substantially unchanged speed during the changeover.

In ECO mode, fuel consumption is reduced to 1/3 of the nominal consumption and then settles at approximately 2/3 of the nominal consumption, with a fuel saving of over 30%. According to the present invention, a pressure sensor MA is arranged on the hydraulic delivery line and another pressure sensor MB is arranged on the return hydraulic line. Each of the two hydraulic lines can be delivery or return in relation to the direction of vehicle travel: forward or reverse.

When the vehicle moves forward, one of the two lines is pressurized, while the other server for oil recovery.

This means that the control can acquire the direction of movement of the vehicle from the control lever of the vehicle and consequently determine which of the two hydraulic lines represents the delivery line.

An angle sensor is associated with the accelerator lever HT to determine the position of the same lever, both in forward and reverse, considering that in some agricultural machines, a single lever allows to control both directions of travel.

Preferably, the control causes switching between
- the first operating mode ST1, accelerator-base, in which the inclination of the accelerator lever proportionally determines a rotation speed of the prime mover and consequently a proportional vehicle speed and
- a second operating mode ST2, ECO, in which the inclination of the accelerator lever indicates a vehicle speed, while the prime mover is operated at a predetermined, approximately fixed operating point, regardless of the vehicle speed (Vehicle Speed).

Preferably, switching from the first to the second operating mode is carried out as described below with the help of Figure 2:
- a first step (Step 1) of verifying that the vehicle speed is approximately constant for a predetermined time interval, then when the verification is positive
- a second step (Step 2) in which the propulsion system is automatically controlled to enter the ECO mode, i.e. to vary the rotation speed of the prime mover to the predetermined operating point and to adapt the hydraulic transmission HY in a way to keep the vehicle speed unchanged during the changeover from the first to the second operating mode, that is, during the variation of the engine speed of the prime mover.

Preferably, the adaptation of the hydraulic transmission includes the fact of increasing the displacement of the pump and/or reducing the displacement of the hydraulic motor. Preferably, to cause the switching from the first to the second operating mode, the processing unit further checks at least one of the following conditions
- The rotation speed of the prime mover,
- the position of the accelerator lever (HT)
and when the rotation speed of the first motor and/or the position of the lever are constant in a predetermined time interval, then the second step is performed which allows to switch from the first to the second operating mode.

Preferably, when the propulsion system operates in accordance with the ECO mode, i.e. the second operating mode, the control further comprises a third step (Step 3) to verify the fulfilment of at least one of the following conditions
- The torque delivered by the prime mover is higher than a predetermined torque threshold,
- The inclination of the accelerator lever exceeds the inclination of the same lever at the instant in which said second step led to the switching into the second operating mode,
- An inclination of a control lever for operating a hydraulic member such as an arm or the like exceeds a predetermined threshold,
and when said verification is positive, then the method involves a fourth step (Step 4) of switching from the second ST2 to the first operating mode ST1, i.e. to leave the ECO mode and return to the accelerator-base mode.

When the vehicle switches from accelerator-based mode to ECO mode, the vehicle speed value is acquired and the hydrostat is controlled in such a way as to keep the vehicle speed substantially unchanged despite the fact that the combustion engine and therefore the hydraulic pump is brought back to the aforementioned predetermined speed of rotation, for example of 1500 rpm.

After this adaptation, the speed of the vehicle is no longer subject to control, therefore, the vehicle is free to accelerate or slow down according to the slope of the path followed or due to the resistance opposed by a pile of material being loaded.

According to the content of the Italian patent application n. 102020000016066, when the pressure value measured on the delivery lines exceeds a predetermined threshold, the control expects to switch from ECO mode to accelerator-base mode.

The main aspect of the present invention is that during operation in ECO mode, the pressure value on the delivery lines (Step 11) connecting the hydraulic pump with the hydraulic motor is continuously monitored, however, rather than controlling the propulsion system in order to switch from ECO mode to accelerator-base mode, the hydrostat is controlled so as to maintain the pressure value measured on the delivery lines at approximately the aforementioned predetermined threshold. This means that when climbing uphill, the vehicle slows down, but the combustion engine maintains the optimum working point.

For example, if the threshold is set at 10 bar, when the measured pressure is 12 bar, the transmission is controlled so that the measured pressure is forced to 10 bar.

This implies that the monitoring of the pressure value with respect to the application 102020000016066, continues to be performed in State 2, but for different purposes than the transition from State 2 to State 1.

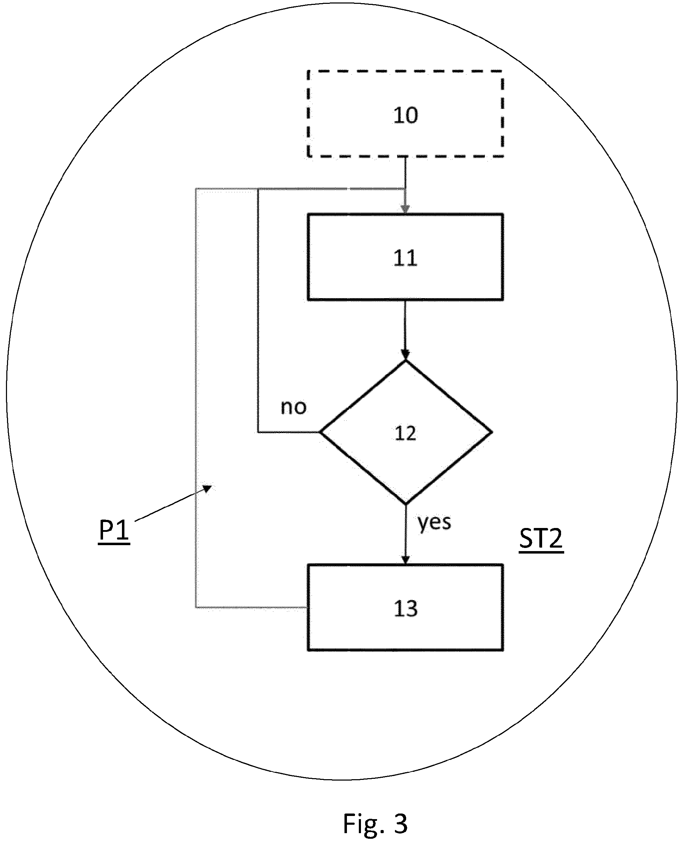

Figure 3 exemplifies a first transmission control process P1 according to an example of implementation of the present invention:
- Step 11 monitoring of the pressure inside the hydrostat delivery line,
- Step 12 checking if the measured pressure value exceeds a predetermined TH1 threshold, in the positive case (12 = yes) then
- Step 13 adjustment of the configuration of the hydrostat in order to bring the measured pressure value approximately to the value of the threshold TH1. In other words, the displacement of the hydraulic motor is reduced with a consequent reduction in vehicle speed.

The first process is carried out cyclically continuously. The modification of the hydrostat configuration is performed recursively, therefore after this modification, the method returns to the monitoring of Step 11.

Preferably, when the control detects that the measured pressure value reaches the aforementioned first threshold, an increase in the displacement of the hydraulic motor is commanded in order to be able to face the climb.

Preferably, when the climb ends, the control restores the hydrostat configuration prior to the pressure reduction intervention.

For example, the introduction of the adjustment (Step 13) of the hydrostat configuration activates a second process P2 which has the purpose of restoring the hydrostat configuration preceding the introduction of the adjustment, when the event that caused the increase pressure in the delivery line ends or is reduced.

Therefore, the second process includes the following steps in succession:
- (Step 14) monitoring the pressure inside the delivery line (F),
- (Step 15) second checking if the measured pressure value is lower than a second predetermined threshold, lower than said first predetermined pressure threshold in the positive case (15 = yes) then,
- (Step 16) elimination of said modification of the hydrostat configuration, otherwise (15 = no) resuming from monitoring (Step 14).

The second process, unlike the first process, ends with the restoration of the previous configuration of the hydrostat (Step 14).

It is evident that the monitoring steps 11 and 14 can be entrusted to a single and common thread that runs in the vehicle processing unit.

Preferably, therefore, the control can be achieved by means of a first process that reduces the pressure in the delivery line during ascents and a second process that "tries" to restore the conditions prior to the intervention of the first process.

Alternatively, the invention can be implemented as a single process with appropriate controls.

Figure 3 shows several dashed blocks that are optional: in step 10 a configuration of the hydrostat and/or a vehicle speed and/or an initial pressure value in the hydrostat delivery line is acquired and stored.

Thanks to this preferred variant of the invention, it is possible to automatically adapt the vehicle transmission to the conditions of the route without exiting from ECO mode, that is, from State 2.

After switching from the accelerator-base mode to the ECO mode, the control, as described above, tends to set a hydrostat configuration to keep the vehicle speed substantially unchanged. During this transition, the configuration of the hydrostat is stored in terms of the displacement of the hydraulic pump and the hydraulic motor or, equivalently, the speed of the vehicle.

The control detects the end of the ascent by detecting that the pressure value of the delivery line moves beyond a second predetermined threshold from the first predetermined threshold.

Alternatively, it can be envisaged that the control continuously tries to bring the hydrostat configuration back to the stored configuration finding an obstacle in the measured pressure value which must remain below the aforementioned first threshold value.

According to a preferred variant of the invention, at step 10 an initial configuration of the hydrostat and/or an initial pressure value in the delivery line of the hydrostat is acquired and stored immediately after switching from the first to the second operating configuration and in which the elimination of the modification of the hydrostat configuration involves the restoration of said initial configuration.

According to another variant of the invention, at step 10 the initial speed of the vehicle is acquired and stored immediately before or immediately after switching from the first to the second operating configuration and in which the elimination of the modification of the hydrostat configuration involves the restoration of the initial speed. Preferably, the elimination step (step 18) comprises acquiring
- a current configuration of the hydrostat and/or
- an actual pressure value and/or
- a current vehicle speed

And forcing said
- current configuration of the hydrostat and/or
- current pressure value and/or
- current vehicle speed

To converge respectively towards
- said initial configuration of the hydrostat and/or
- initial pressure value and/or
- initial vehicle speed.

The present invention can be advantageously implemented by means of a computer program which comprises coding means for carrying out one or more steps of the method, when this program is executed on a computer. Therefore it is intended that the scope of protection extends to said computer program and further to computer readable means comprising a recorded message, said computer readable means comprising program coding means for carrying out one or more steps of the method. , when said program is run on a computer.

Implementation variants of the described non-limiting example are possible, without however departing from the scope of the claims.

From the above description, the person skilled in the art is able to realize the object of the invention without introducing further construction details.

## Claims

1. A method of controlling a propulsion system of a work or agricultural vehicle, in which the propulsion system comprises a prime mover (E) and a hydraulic transmission (HY) comprising a hydrostat wherein a variable displacement pump (HP) is configured to be driven in rotation by the prime mover and a variable displacement hydraulic motor (HM) is operatively connected to the pump by means of a delivery (F) and a return (R) hydraulic line, the method providing
- a first operating mode (ST1) wherein an inclination value of an accelerator lever identifies a corresponding value of the rotation speed of the prime mover and
- a second operating mode (ST2) wherein said lever inclination value identifies a vehicle speed value, while the prime mover is operated at a predetermined, approximately fixed operating point,
the method, in said second operating mode, comprising a first process (P1) comprising the following steps in cyclic succession:
- (Step 11) monitoring the pressure inside the delivery line (F),
- (Step 12) first check if a pressure value of said monitored pressure exceeds a first predetermined threshold, in the positive case (12 = yes) then
- (Step 13) imposing a modification to the hydrostat configuration so that the measured pressure value is approximately equal to the first predetermined threshold, without changing the operating point of the prime mover;
**characterized in that** said imposition of the modification of the configuration of the hydrostat further comprises the fact of activating a second process (P2) parallel to the first process (P1) comprising the following steps in succession:
- (Step 14) monitoring the pressure inside the delivery line (F),
- (Step 15) second check if a monitored pressure value is lower than a second predetermined threshold, lower than said first predetermined pressure threshold, in the positive case (15 = yes) then,
- (Step 16) elimination of said modification of the hydrostat configuration, otherwise (15 = no), resuming from monitoring (Step 14).

2. Method according to claim 1, wherein a control signal of a displacement of the hydraulic motor of the hydrostat is directly proportional to the displacement of the hydraulic motor, and wherein said modification of the configuration of the hydrostat consists in an increase of the signal control.

3. Method according to any of claim 1 or 2, further comprising a step of acquiring and storing (Step 10) an initial configuration of the hydrostat and/or an initial pressure value in the delivery line of the hydrostat immediately after a switchover from the first to the second operating configuration and wherein said elimination of said modification of the configuration of the hydrostat involves the restoration of said initial configuration.

4. Method according to any of claim 1 or 2, further comprising a step of acquiring and storing (Step 10) an initial vehicle speed immediately before or after switching from the first to the second operating configuration and wherein said elimination of said modification of the hydrostat configuration involves the restoration of said initial speed.

5. Method according to claim 4, wherein said elimination step (step 18) comprises acquiring
- a current configuration of the hydrostat and/or
- an actual pressure value and/or
- a current vehicle speed
to force said
- current configuration of the hydrostat and/or
- current pressure value and/or
- current vehicle speed
To converge respectively towards
- said initial configuration of the hydrostat and/or
- initial pressure value and/or
- initial vehicle speed.

6. Method according to any one of the preceding claims, wherein in said first operating mode, the method comprising a first step (Step 1) of verifying that a vehicle speed is approximately constant for a predetermined time interval, then when the verification is positive (yes), a second step (Step 2) wherein the propulsion system is automatically controlled to switch into said second operating mode by the following steps:
- variation of the speed of rotation of the prime mover by bringing the prime mover to said predetermined operating point and for
- adaptation of the hydraulic transmission in order to maintain the vehicle speed unchanged during the changeover from the first to the second operating mode.

7. Computer program comprising program coding means adapted to perform all steps of any one of claims 1 to 6, when said program is run on a computer.

8. Computer readable means comprising a recorded program, said computer readable means comprising program coding means adapted to perform all steps of any one of claims 1 to 6, when said program is run on a computer.

## Patentansprüche

1. Verfahren zur Steuerung eines Antriebssystems eines Arbeits- oder Landwirtschaftsfahrzeugs, bei dem das Antriebssystem eine Antriebsmaschine (E) und ein hydraulisches Getriebe (HY) umfasst, das einen Hydrostat umfasst, wobei eine Verstellpumpe (HP) konfiguriert ist, um durch die Antriebsmaschine rotierend angetrieben zu werden, und ein hydraulischer Verstellmotor (HM) mittels einer Zuführ- (F) und einer Rücklauf- (R) Hydraulikleitung funktionell mit der Pumpe verbunden ist, wobei das Verfahren vorsieht
- einen ersten Betriebsmodus (ST1), wobei ein Neigungswert eines Gashebels einen entsprechenden Wert der Drehzahl der Antriebsmaschine identifiziert und
- einen zweiten Betriebsmodus (ST2), wobei der Hebelneigungswert einen Fahrzeuggeschwindigkeitswert identifiziert, während die Antriebsmaschine an einem vorbestimmten, etwa festen Betriebspunkt betrieben wird,
wobei das Verfahren in dem besagten zweiten Betriebsmodus einen ersten Prozess (P1) umfasst, der die folgenden Schritte in zyklischer Abfolge umfasst:
- (Schritt 11) Überwachen des Drucks innerhalb der Zuführleitung (F),
- (Schritt 12) erste Überprüfung, ob ein Druckwert des überwachten Drucks einen ersten vorbestimmten Schwellenwert überschreitet, im positiven Fall (12 = ja) dann
- (Schritt 13) Auferlegen einer Modifikation an die Hydrostat-Konfiguration, so dass der gemessene Druckwert etwa gleich dem ersten vorbestimmten Schwellenwert ist, ohne den Betriebspunkt der Antriebsmaschine zu ändern;
**dadurch gekennzeichnet, dass** die Auferlegung der Modifikation der Konfiguration des Hydrostats ferner die Tatsache umfasst, einen zweiten Prozess (P2) parallel zu dem ersten Prozess (P1) zu aktivieren, der die folgenden Schritte in Abfolge umfasst:
- (Schritt 14) Überwachen des Drucks innerhalb der Zufuhrleitung (F),
- (Schritt 15) zweite Überprüfung, ob ein überwachter Druckwert niedriger als ein zweiter vorbestimmter Schwellenwert ist, niedriger als der erste vorbestimmte Druckschwellenwert, im positiven Fall (15 = ja) dann,
- (Schritt 16) Beseitigung der Modifikation der Hydrostat-Konfiguration, andernfalls (15 = nein), Wiederaufnahme ab der Überwachung (Schritt 14).

2. Verfahren nach Anspruch 1, wobei ein Steuersignal einer Verstellung des Hydraulikmotors des Hydrostats direkt proportional zur Verstellung des Hydraulikmotors ist, und wobei die Modifikation der Konfiguration des Hydrostats in einer Erhöhung der Signalsteuerung besteht.

3. Verfahren nach einem der Ansprüche 1 oder 2, ferner umfassend einen Schritt des Erfassens und Speicherns (Schritt 10) einer Anfangskonfiguration des Hydrostats und/oder eines Anfangsdruckwerts in der Zufuhrleitung des Hydrostats unmittelbar nach einer Umschaltung von der ersten zu der zweiten Betriebskonfiguration und wobei die Beseitigung der Modifikation der Konfiguration des Hydrostats die Wiederherstellung der Anfangskonfiguration beinhaltet.

4. Verfahren nach einem der Ansprüche 1 oder 2, ferner umfassend einen Schritt des Erfassens und Speicherns (Schritt 10) einer anfänglichen Fahrzeuggeschwindigkeit unmittelbar vor oder nach dem Umschalten von der ersten zu der zweiten Betriebskonfiguration und wobei die Beseitigung der Modifikation der Hydrostat-Konfiguration die Wiederherstellung der anfänglichen Geschwindigkeit beinhaltet.

5. Verfahren nach Anspruch 4, wobei der Beseitigungsschritt (Schritt 18) das Erfassen von Folgendem umfasst
- einer aktuelle Konfiguration des Hydrostats und/oder
- eines tatsächlichen Druckwert und/oder
- einer aktuellen Fahrzeuggeschwindigkeit
um zu erzwingen, dass
- die aktuelle Konfiguration des Hydrostats und/oder
- der aktuelle Druckwert und/oder
- die aktuelle Fahrzeuggeschwindigkeit
jeweils konvergieren in Richtung
- der Anfangskonfiguration des Hydrostats und/oder
- des Anfangsdruckwerts und/oder
- der anfänglichen Fahrzeuggeschwindigkeit.

6. Verfahren nach einem der vorhergehenden Ansprüche, wobei in dem ersten Betriebsmodus das Verfahren einen ersten Schritt (Schritt 1) der Überprüfung umfasst, dass eine Fahrzeuggeschwindigkeit für ein vorbestimmtes Zeitintervall annähernd konstant ist, dann, wenn die Überprüfung positiv ist (ja), einen zweiten Schritt (Schritt 2), wobei das Antriebssystem automatisch gesteuert wird, um durch die folgenden Schritte in den zweiten Betriebsmodus zu wechseln:
- Variation der Drehgeschwindigkeit der Antriebsmaschine durch Bringen der Antriebsmaschine zu dem vorbestimmten Betriebspunkt und zum
- Anpassung des hydraulischen Getriebes, um die Fahrzeuggeschwindigkeit während des Übergangs vom ersten zum zweiten Betriebsmodus unverändert zu halten.

7. Computerprogramm, umfassend Programmcodiermittel, die dazu ausgelegt sind, alle Schritte nach einem der Ansprüche 1 bis 6 durchzuführen, wenn das Programm auf einem Computer ausgeführt wird.

8. Computerlesbare Mittel, umfassend ein aufgezeichnetes Programm, wobei die computerlesbaren Mittel Programmcodiermittel umfassen, die dazu ausgelegt sind, alle Schritte nach einem der Ansprüche 1 bis 6 durchzuführen, wenn das Programm auf einem Computer ausgeführt wird.

## Revendications

1. Procédé de commande d'un système de propulsion d'un véhicule de travail ou agricole, dans lequel le système de propulsion comprend un moteur principal (E) et une transmission hydraulique (HY) comprenant un hydrostat, dans lequel une pompe à cylindrée variable (HP) est conçue pour être entraînée en rotation par le moteur principal et un moteur hydraulique à cylindrée variable (HM) est relié de manière fonctionnelle à la pompe au moyen d'une ligne hydraulique de refoulement (F) et d'une ligne hydraulique de retour (R), le procédé pourvoyant
- un premier mode de fonctionnement (ST1), dans lequel une valeur d'inclinaison d'un levier d'accélérateur identifie une valeur correspondante de la vitesse de rotation du moteur principal, et
- un second mode de fonctionnement (ST2) dans lequel ladite valeur d'inclinaison de levier identifie une valeur de vitesse de véhicule, tandis que le moteur principal est actionné à un point de fonctionnement prédéterminé approximativement fixe,
le procédé, dans ledit second mode de fonctionnement, comprenant un premier processus (P1) comprenant les étapes suivantes en succession cyclique :
- (Étape 11) la surveillance de la pression à l'intérieur de la ligne de refoulement (F),
- (Étape 12) une première vérification pour savoir si une valeur de pression de ladite pression surveillée dépasse un premier seuil prédéterminé, dans le cas positif (12 = oui) alors
- (Étape 13) l'imposition d'une modification à la configuration de l'hydrostat de sorte que la valeur de pression mesurée soit approximativement égale au premier seuil prédéterminé, sans changer le point de fonctionnement du moteur principal ;
**caractérisé en ce que** ladite imposition de la modification de la configuration de l'hydrostat comprend en outre le fait d'activer un second processus (P2) parallèle au premier processus (P1) comprenant les étapes suivantes en succession :
- (Étape 14) la surveillance de la pression à l'intérieur de la ligne de refoulement (F),
- (Étape 15) une seconde vérification pour savoir si une valeur de pression surveillée est inférieure à un second seuil prédéterminé, inférieur audit premier seuil de pression prédéterminé, dans le cas positif (15 = oui) alors,
- (Étape 16) l'élimination de ladite modification de la configuration de l'hydrostat, sinon (15 = non), la reprise de la surveillance (Étape 14).

2. Procédé selon la revendication 1, dans lequel un signal de commande d'une cylindrée du moteur hydraulique de l'hydrostat est directement proportionnel à la cylindrée du moteur hydraulique, et dans lequel ladite modification de la configuration de l'hydrostat consiste en une augmentation de la commande de signal.

3. Procédé selon l'une quelconque des revendications 1 ou 2, comprenant en outre une étape d'acquisition et de stockage (Étape 10) d'une configuration initiale de l'hydrostat et/ou d'une valeur de pression initiale dans la ligne de refoulement de l'hydrostat immédiatement après une commutation de la première à la seconde configuration de fonctionnement et dans lequel ladite élimination de ladite modification de la configuration de l'hydrostat implique la restauration de ladite configuration initiale.

4. Procédé selon l'une quelconque de la revendication 1 ou 2, comprenant en outre une étape d'acquisition et de stockage (Étape 10) d'une vitesse initiale du véhicule immédiatement avant ou après la commutation de la première à la seconde configuration de fonctionnement et dans lequel ladite élimination de ladite modification de la configuration de l'hydrostat implique la restauration de ladite vitesse initiale.

5. Procédé selon la revendication 4, dans lequel ladite étape d'élimination (étape 18) comprend l'acquisition
- d'une configuration actuelle de l'hydrostat et/ou
- d'une valeur de pression réelle et/ou
- d'une vitesse actuelle du véhicule
pour forcer lesdites
- configuration actuelle de l'hydrostat et/ou
- valeur de pression actuelle et/ou
- vitesse actuelle du véhicule
à converger respectivement vers
- ladite configuration initiale de l'hydrostat et/ou
- ladite valeur de pression initiale et/ou
- ladite vitesse initiale du véhicule.

6. Procédé selon l'une quelconque des revendications précédentes, dans lequel, dans ledit premier mode de fonctionnement, le procédé comprend une première étape (Étape 1) consistant à vérifier qu'une vitesse de véhicule est approximativement constante pendant un intervalle de temps prédéterminé, puis, lorsque la vérification est positive (oui), une seconde étape (Étape 2) dans laquelle le système de propulsion est automatiquement commandé pour commuter vers ledit second mode de fonctionnement par les étapes suivantes :
- la variation de la vitesse de rotation du moteur principal en amenant le moteur principal vers ledit point de fonctionnement prédéterminé, et pour
- l'adaptation de la transmission hydraulique afin de maintenir la vitesse du véhicule inchangée lors du passage du premier au second mode de fonctionnement.

7. Programme informatique comprenant un moyen de codage de programme adapté pour effectuer toutes les étapes selon l'une quelconque des revendications 1 à 6, lorsque ledit programme est exécuté sur un ordinateur.

8. Moyen lisible par ordinateur comprenant un programme enregistré, ledit moyen lisible par ordinateur comprenant un moyen de codage de programme adapté pour effectuer toutes les étapes selon l'une quelconque des revendications 1 à 6, lorsque ledit programme est exécuté sur un ordinateur.
